# EUROPEAN PATENT SPECIFICATION

(11) **EP 2 438 590 B1**
(45) Date of publication and mention of the grant of the patent: **24.08.2016**
(21) Application number: 10784203.1
(22) Date of filing: 04.06.2010
(51) Int. Cl.: G10L 15/193, G01C 21/36

(54) **NAVIGATION SYSTEM WITH SPEECH PROCESSING MECHANISM AND METHOD OF OPERATION THEREOF**
NAVIGATIONSSYSTEM MIT SPRACHVERARBEITUNGSMECHANISMUS UND BEDIENUNGSVERFAHREN DAFÜR
SYSTÈME DE NAVIGATION AVEC MÉCANISME DE TRAITEMENT DE PAROLE ET PROCÉDÉ DE FONCTIONNEMENT ASSOCIÉ

(30) Priority: 05.06.2009 US 479494
(43) Date of publication of application: 11.04.2012
(73) Proprietor: TeleNav, Inc., Sunnyvale, CA 94086 (US)
(72) Inventor: CHEN, Hong, San Jose California 95129 (US)
(74) Representative: Liesegang, Eva
(86) International application number: PCT/US2010/037519
(87) International publication number: WO 2010/141904

(56) References cited:
- EP-A1- 2 058 778
- WO-A2-01/61276
- US-A1- 2006 020 493
- US-A1- 2006 212 291
- US-A1- 2007 073 719
- US-A1- 2009 030 685
- US-A1- 2009 030 685
- US-A1- 2009 037 174

## Description

### TECHNICAL FIELD

The present invention relates generally to a navigation system, and more particularly to a system for a navigation system with speech processing mechanism.

### BACKGROUND ART

Modern portable consumer and industrial electronics provide increasing levels of functionality to support modern life including location-based information services. This is especially true for client devices such as navigation systems, cellular phones, portable digital assistants, and multifunction devices.

As users adopt mobile location-based service devices, new and old usage begin to take advantage of this new device space. There are many solutions to take advantage of this new device opportunity. One existing approach is to use location information to provide navigation services, such as a global positioning service (GPS) navigation system for a mobile device.

Navigation system and service providers are continually making improvement in the user's experience in order to be competitive. In navigation services, demand for better usability using recognition is increasingly important. Voice processing is one of the most useful and yet challenging tasks.

In voice processing, the task of processing user's utterance and recognizing a user's desired search location has to account for constraints of the mobile devices, limited mobile network bandwidth and speed, and noise in the environment. Such task has to also account for latency, from which poor performance can arise and causes an undesirable effect on the user's experience. In addition, voice processing using a large set of vocabularies can greatly affect the accuracy of the result.

In response to consumer demand, navigation systems are providing ever-increasing amounts of information requiring these systems to improve usability, performance, and accuracy. This information includes map data, business data, local weather, and local driving conditions. The demand for more information and the need to provide user-friendly experience, low latency, and accuracy continue to challenge the providers of navigation systems.

Thus, a need remains for a navigation system to provide information with improvement in usability, performance, and accuracy. In view of the ever-increasing commercial competitive pressures, along with growing consumer expectations and the diminishing opportunities for meaningful product differentiation in the marketplace, it is increasingly critical that answers be found to these problems. Additionally, the need to reduce costs, improve efficiencies and performance, and meet competitive pressures adds an even greater urgency to the critical necessity for finding answers to these problems.

Solutions to these problems have been long sought but prior developments have not taught or suggested any solutions and, thus, solutions to these problems have long eluded those skilled in the art.

Document US2009/0030685 A1 (29.01.2009) discloses a navigation system with a voice-based user interface comprising regional language models based on the current location and further contextual cues, as well as sub-region search grammars.

Document US2006/0212291 A1 (21.09.2006) describes another navigation system with a voice-based user interface making use of preposition recognition to fill out the relevant fields when performing speech recognition.

### DISCLOSURE OF THE INVENTION

The present invention provides a method of operation of a navigation system according to claim 1.

Certain embodiments of the invention have further steps or elements. The steps or elements will become apparent to those skilled in the art from a reading of the following detailed description when taken with reference to the accompanying drawings.

### BRIEF DESCRIPTION OF THE DRAWINGS

FIG. 1 is an example of an environment using an embodiment of the present invention.
FIG. 2 is a screen shot of an example application of a navigation system with speech processing mechanism of an embodiment of the present invention.
FIG. 3 is a block diagram of a navigation system with speech processing mechanism .
FIG. 4 is a block diagram of a navigation system with speech processing mechanism.
FIG. 5 is a flow chart of a navigation system with speech processing mechanism in an embodiment of the present invention.
FIG. 6 is a flow chart of a method of operation of a navigation system with speech processing mechanism.

### BEST MODE FOR CARRYING OUT THE INVENTION

The following embodiments examples are described in sufficient detail to enable those skilled in the art to make and use the invention. It is to be understood that other embodiments examples would be evident based on the present disclosure, and that system, process, or mechanical changes can be made without departing from the scope of the present invention as defined by the claims.

In the following description, numerous specific details are given to provide a thorough understanding of the invention. However, it can be apparent that the invention can be practiced without these specific details. In order to avoid obscuring the present invention, some well-known circuits, system configurations, and process locations are not disclosed in detail.

The drawings showing embodiments examples of the system are semi-diagrammatic and not to scale and, particularly, some of the dimensions are for the clarity of presentation and are shown exaggerated in the drawing FIGs. Similarly, although the views in the drawings for ease of description generally show similar orientations, this depiction in the FIGs. is arbitrary for the most part. Generally, the invention can be operated in any orientation.

The same or similar numbers are used in all the drawing FIGs. to relate to the same elements.

One skilled in the art would appreciate that the format with which navigation information is expressed is not critical to some embodiments examples of the invention. For example, in some embodiments examples, navigation information is presented in the format of (x, y), where x and y are two ordinates that define the geographic location, i.e., a position of a user.

The navigation information is presented by longitude and latitude related information. The navigation information also includes a velocity element including a speed component and a direction component.

The term "navigation routing information" referred to herein is defined as the routing information described as well as information relating to points of interest to the user, such as local business, hours of businesses, types of businesses, advertised specials, traffic information, maps, local events, and nearby community or personal information.

The term "module" referred to herein can include software, hardware, or a combination thereof. For example, the software can be machine code, firmware, embedded code, and application software. Also for example, the hardware can be circuitry, processor, computer, integrated circuit, integrated circuit cores, or a combination thereof.

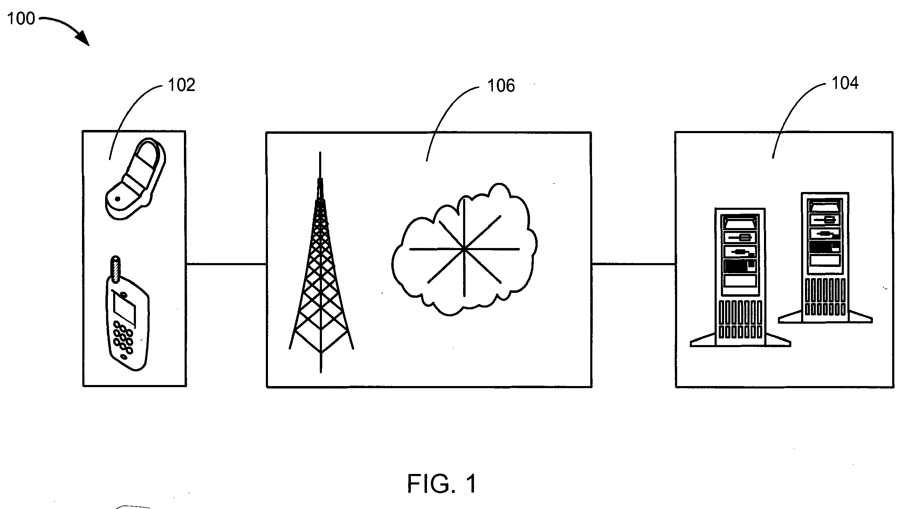

Referring now to FIG. 1, therein is shown an example of an environment 100 using an embodiment of the present invention. The environment 100 applies to any embodiment of the present invention described later. The environment 100 includes a first device 102, such as a mobile device or a car head unit. The first device 102 can be linked to a second device 104, such as a server or a client, with a communication path 106, such as wireless network, wired network, or a combination thereof.

The first device 102 can be of any of a variety of mobile devices. For example, the first device 102 can be a cellular phone, personal digital assistant, a notebook computer, or other multi-functional mobile communication or entertainment devices having means for coupling to the communication path 106.

The second device 104 can be any of a variety of centralized or decentralized computing devices. For example, the second device 104 can be a computer, a computer in a grid computing pool, a virtualized computer, a computer in a cloud computing pool, or a computer in a distributed computing topology. The second device 104 can include routing functions or switching functions for coupling with the communication path 106 to communicate with the first device 102.

As a further example, the second device 104 can be a particularized machine, such as a mainframe, a server, a cluster server, rack mounted server, or a blade server, or as more specific examples, an IBM System z10 (TM) Business Class mainframe or a HP ProLiant ML (TM) server. Yet another example, the first device 102 can be a particularized machine, such as a portable computing device, a thin client, a notebook, a netbook, a smartphone, personal digital assistant, or a cellular phone, and as specific examples, an Apple iPhone (TM), Palm Centro (TM), or Moto Q Global (TM).

The communication path 106 can be a variety of networks. For example, the communication path 106 can include wireless communication, wired communication, optical, ultrasonic, or a combination thereof. Satellite communication, cellular communication, Bluetooth, Infrared Data Association standard (IrDA), wireless fidelity (WiFi), and worldwide interoperability for microwave access (WiMAX) are examples of wireless communication that can be included in the communication path 106. Ethernet, digital subscriber line (DSL), fiber to the home (FTTH), and plain old telephone service (POTS) are examples of wired communication that can be included in the communication path 106.

Further, the communication path 106 can traverse a number of network topologies and distances. For example, the communication path 106 can include personal area network (PAN), local area network (LAN), metropolitan area network (MAN), and wide area network (WAN).

For illustrative purposes, the environment 100 is shown with the first device 102 as a mobile computing device, although it is understood that the first device 102 can be different types of computing devices. For example, the first device 102 can be a mobile computing device, such as notebook computer, another client device, or a different type of client device.

Further for illustrative purposes, the second device 104 is shown in a single location, although it is understood that the server can be centralized or decentralized and located at different locations. For example, the second device 104 can represent real or virtual servers in a single computer room, distributed across different rooms, distributed across different geographical locations, embedded within a telecommunications network, virtualized servers within one or more other computer systems including grid or cloud type computing resources, or in a high powered client device.

Yet further for illustrative purposes, the environment 100 is shown with the first device 102 and the second device 104 as end points of the communication path 106, although it is understood that the environment 100 can have a different partition between the first device 102, the second device 104, and the communication path 106. For example, the first device 102, the second device 104, or a combination thereof can also function as part of the communication path 106.

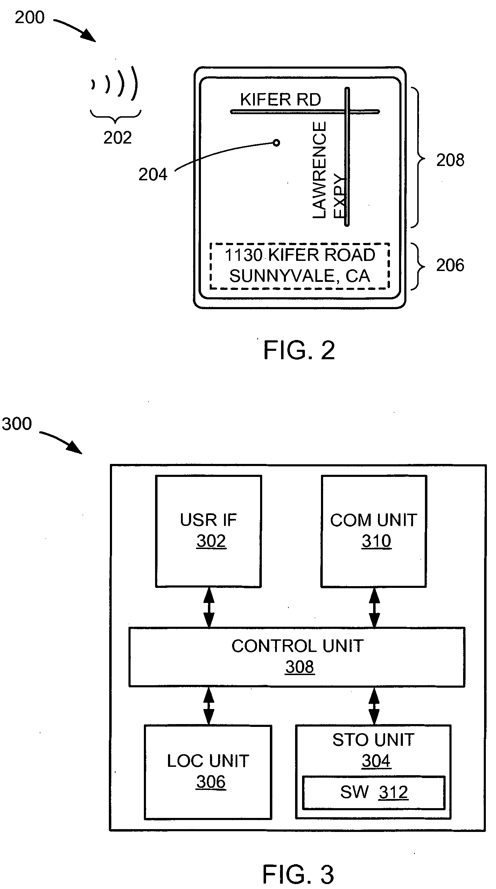

Referring now to FIG. 2, therein is shown a screen shot of an example application of a navigation system 200 with speech processing mechanism of an embodiment of the present invention. The screen shot can represent the screen shot for the environment 100 of FIG. 1.

The screen shot depicts the navigation system 200 receiving a spoken input 202, which can be a user's utterance. The spoken input 202 can include a user's desired location 204. In this example application, the spoken input 202 can be entered as "1130 Kifer Road Sunnyvale California".

The navigation system 200 can process the spoken input 202 to determine a location identifier 206, which can include a designation of the user's desired location 204. The screen shot depicts the location identifier 206 as "1130 Kifer Road Sunnyvale California". The screen shot also depicts the user's desired location 204 with a map 208.

For illustrative purposes, the navigation system 200 includes the location identifier 206 having a street address, a city name, and a state name, although it is understood that the navigation system 200 can have a different format for the location identifier 206. For example, the location identifier 206 can have different field depending on different country geographic designations, such as province or townships or unit number. The location identifier 206 can also refer to unique identification for rural areas of with different designation fields. The location identifier 206 can further represent a navigation identification with point of interest or an intersection.

Referring now to FIG. 3, therein is shown a block diagram of a navigation system 300 with speech processing mechanism. The navigation system 300 can be the first device 102 of FIG. 1.

For example, the navigation system 300 can be any of a variety of devices, such as a cellular phone, a personal digital assistant, a notebook computer, or an entertainment device. The navigation system 300 can be a standalone device, or can be incorporated with a vehicle, for example a car, truck, bus, or train.

As a further example, the navigation system 300 can be a particularized machine, such as a portable computing device, a thin client, a notebook, a netbook, a smartphone, personal digital assistant, or a cellular phone, and as specific examples, an Apple iPhone (TM), Palm Centro (TM), or Moto Q Global (TM).

The navigation system 300 can include a user interface 302, a storage unit 304, a location unit 306, and a control unit 308, such as a processor, an embedded processor, a microprocessor, a hardware control logic, a hardware finite state machine (FSM), a digital signal processor (DSP), a communication unit 310, or a combination thereof. The user interface 302 can interface with an input device and an output device.

Examples of the input device of the user interface 302 can include a keypad, a touchpad, soft-keys, a keyboard, a microphone, or any combination thereof to provide data and communication inputs. Examples of the output device of the user interface 302 can include a display, a projector, a video screen, a speaker, or any combination thereof.

The control unit 308 can execute a software 312 and can provide the intelligence of the navigation system 300. The control unit 308 can operate the user interface 302 to display information generated by the navigation system 300. The control unit 308 can also execute the software 312 for the other functions of the navigation system 300, including receiving location information from the location unit 306.

The control unit 308 can execute the software 312 for interaction with the communication path 106 of FIG. 1 via the communication unit 310. The communication unit 310 can include active and passive components, such as microelectronics or an antenna, for interaction with the communication path 106 of FIG. 1.

The location unit 306 of the navigation system 300 can generate location information, current heading, and current speed of the navigation system 300, as examples. The location unit 306 can be implemented in many ways. For example, the location unit 306 can be a global positioning system (GPS), inertial navigation system, cell-tower location system, accelerometer location system, or any combination thereof.

The storage unit 304 can store the software 312. The storage unit 304 can also store the relevant information, such as advertisements, points of interest (POI), navigation routing entries, or any combination thereof.

For illustrative purposes, the navigation system 300 is shown with the partition having the user interface 302, the storage unit 304, the location unit 306, the control unit 308, and the communication unit 310 although it is understood that the navigation system 300 can have a different partition. For example, the location unit 306 can be partitioned between the control unit 308 and the software 312.

The screen shot of the navigation system 200 of FIG. 2 can represent the screen shot for the navigation system 300. The navigation system 300 can perform speech recognition of the spoken input 202 of FIG. 2 with the control unit 308, the software 312, or a combination thereof. The input device of the user interface 302 can receive the spoken input 202 of FIG. 2.

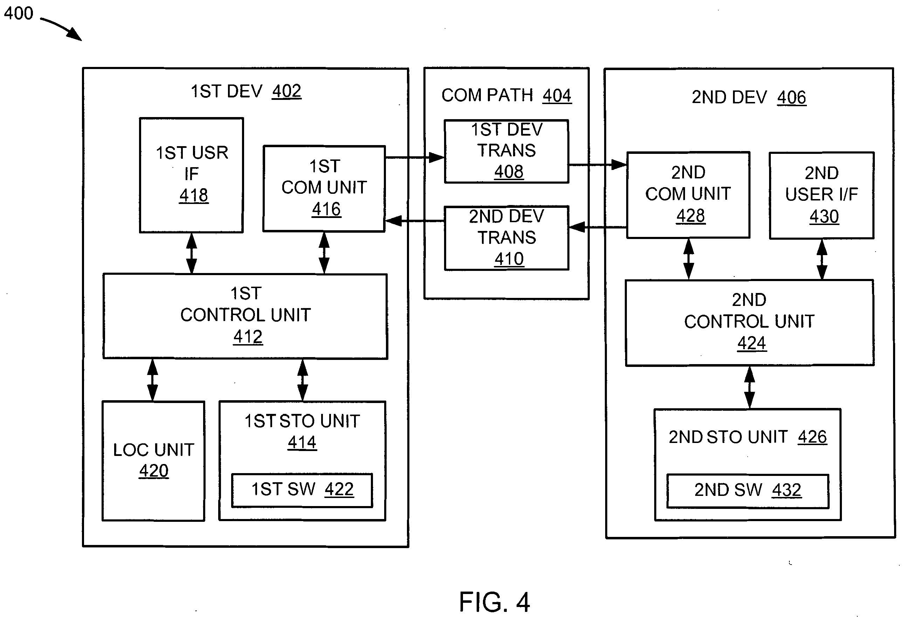

Referring now to FIG. 4, therein is shown a block diagram of a navigation system 400 with speech processing mechanism. The navigation system 400 can include a first device 402, a communication path 404, and a second device 406.

The first device 402 can communicate with the second device 406 over the communication path 404. For example, the first device 402, the communication path 404, and the second device 406 can be the first device 102 of FIG. 1, the communication path 106 of FIG. 1, and the second device 104 of FIG. 1, respectively.

The first device 402 can send information in a first device transmission 408 over the communication path 404 to the second device 406. The second device 406 can send information in a second device transmission 410 over the communication path 404 to the first device 402. The first device transmission 408 can include wireless network, wired network, or a combination thereof. The second device transmission 410 can include wireless network, wired network, or a combination thereof.

For illustrative purposes, the navigation system 400 is shown with the first device 402 as a client device, although it is understood that the navigation system 400 can have the first device 402 as a different type of device. For example, the first device 402 can be a server.

Also for illustrative purposes, the navigation system 400 is shown with the second device 406 as a server, although it is understood that the navigation system 400 can have the second device 406 as a different type of device. For example, the second device 406 can be a client device.

As a further example, the second device 406 can be a particularized machine, such as a mainframe, a server, a cluster server, rack mounted server, or a blade server, or as more specific examples, an IBM System z10 (TM) Business Class mainframe or a HP ProLiant ML (TM) server. Yet another example, the first device 402 can be a particularized machine, such as a portable computing device, a thin client, a notebook, a netbook, a smartphone, personal digital assistant, or a cellular phone, and as specific examples, an Apple iPhone (TM), Palm Centro (TM), or Moto Q Global (TM).

For brevity of description in this exemplary system, the first device 402 will be described as a client device and the second device 406 will be described as a server device. The system is not limited to this selection for the type of devices. The selection is just an example.

The first device 402 can include, for example, a first control unit 412, such as a processor, an embedded processor, a microprocessor, a hardware control logic, a hardware finite state machine (FSM), a digital signal processor (DSP), or a combination thereof, a first storage unit 414, a first communication unit 416, a first user interface 418, and a location unit 420. For illustrative purposes, the navigation system 400 is shown with the first device 402 described with discrete functional modules, although it is understood that the navigation system 400 can have the first device 402 in a different configuration. For example, the first control unit 412, the first communication unit 416, the first user interface 418 may not be discrete functional modules but may have one or more of the aforementioned modules combined into one functional module.

The first control unit 412 can execute a first software 422 from the first storage unit 414 and provide the intelligence of the first device 402. The first control unit 412 can operate the first user interface 418 to display information generated by the navigation system 400.

The first control unit 412 can also execute the first software 422 for the other functions of the navigation system 400. For example, the first control unit 412 can execute the first software 422 for operating the location unit 420.

The first storage unit 414 can be implemented in a number of ways. For example, the first storage unit 414 can be a volatile memory, a nonvolatile memory, an internal memory, or an external memory. The first storage unit 414 can include the first software 422.

The first control unit 412 can execute the first software 422 and can provide the intelligence of the first device 402 for interaction with the second device 406, the first user interface 418, the communication path 404 via the first communication unit 416, and the location unit 420. The first communication unit 416 can include active and passive components, such as microelectronics or an antenna, for interaction with the communication path 404.

The location unit 420 of the first device 402 can generate location reading, current heading, and current speed of the first device 402, as examples. The location unit 420 can be implemented in many ways. For example, the location unit 420 can be a global positioning system (GPS), inertial navigation system, cell-tower location system, accelerometer location system, or any combination thereof.

The second device 406 can include, for example, a second control unit 424, such as a processor, an embedded processor, a microprocessor, a hardware control logic, a hardware finite state machine (FSM), a digital signal processor (DSP), or a combination thereof, a second storage unit 426, a second communication unit 428, and a second user interface 430. For illustrative purposes, the navigation system 400 is shown with the second device 406 described with discrete functional modules, although it is understood that the navigation system 400 can have the second device 406 in a different configuration. For example, the second control unit 424, the second communication unit 428, and the second user interface 430 may not be discrete functional modules but may have one or more of the aforementioned modules combined into one functional module.

The second storage unit 426 can include a second software 432 of the second device 406. For illustrative purposes, the second storage unit 426 is shown as a single element, although it is understood that the second storage unit 426 can be a distribution of storage elements.

Also for illustrative purposes, the navigation system 400 is shown with the second storage unit 426 as a single hierarchy storage system, although it is understood that the navigation system 400 can have the second storage unit 426 in a different configuration. For example, the second storage unit 426 can be formed with different storage technologies forming a memory hierarchal system including different levels of caching, main memory, rotating media, or off-line storage.

The second control unit 424 can execute the second software 432 and provide the intelligence of the second device 406 for interaction with the first device 402, the second user interface 430, and the communication path 404 via the second communication unit 428. The first communication unit 416 can couple with the communication path 404 to send information to the second device 406 in the first device transmission 408. The second device 406 can receive information in the second communication unit 428 from the first device transmission 408 of the communication path 404.

The second communication unit 428 can couple with the communication path 404 to send information to the first device 402 in the second device transmission 410. The first device 402 can receive information in the first communication unit 416 from the second device transmission 410 of the communication path 404. The navigation system 400 can be executed by the first control unit 412, the second control unit 424, or a combination thereof.

For illustrative purposes, the navigation system 400 is shown with the modules of the navigation system 400 operated by the first device 402 and the second device 406. It is to be understood that the first device 402 and the second device 406 can operate any of the modules and functions of the navigation system 400. For example, the first device 402 is shown to operate the location unit 420, although it is understood that the second device 406 can also operate the location unit 420.

The screen shot of the navigation system 200 of FIG. 2 can represent the screen shot for the navigation system 400. The navigation system 400 can perform speech recognition of the spoken input 202 of FIG. 2 with the first control unit 412, the first software 422, the second control unit 424, the second software 432, or a combination thereof. The input device of the first user interface 418, the second user interface 430, or a combination thereof, can receive the spoken input 202 of FIG. 2.

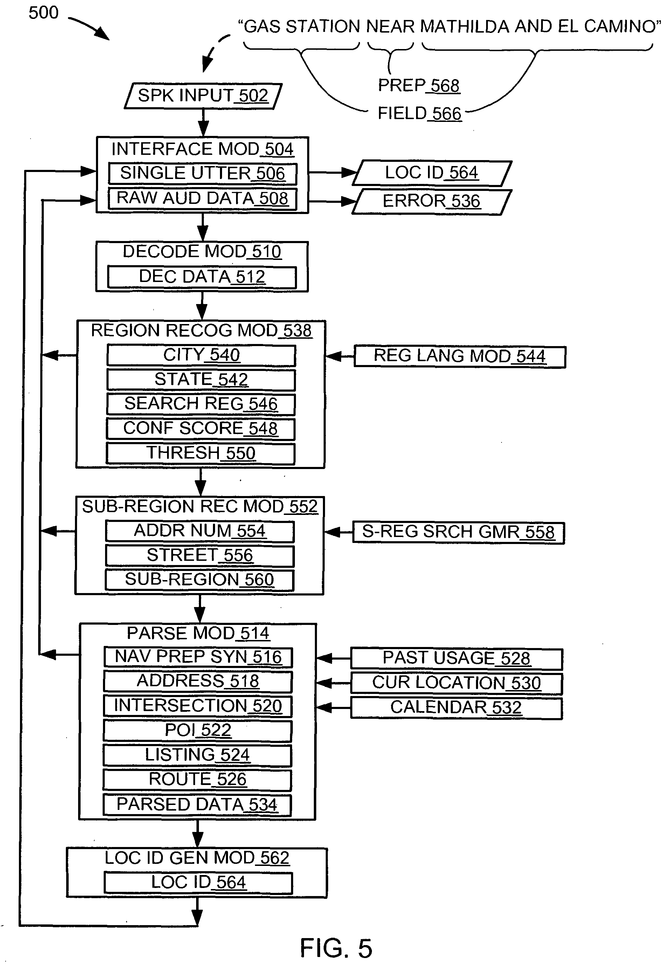

Referring now to FIG. 5, therein is shown a flow chart of a navigation system 500 with speech processing mechanism in an embodiment of the present invention. As an example, the navigation system 500 can be operated by running the software 312 of FIG. 3. As another example, the navigation system 500 can be operated by running the first software 422 of FIG. 4, the second software 432 of FIG. 4, or a combination thereof.

The flow chart depicts a spoken input 502, which can include a user's request made by having the user speaks into the navigation system 500. The spoken input 502 can be the spoken input 202 of FIG. 2.

The flow chart depicts the spoken input 502 is entered into an interface module 504, which can be a module that includes input and/or output functions for receiving and/or sending information. For example, the interface module 504 can be implemented with the navigation system 300 of FIG. 3. The interface module 504 can be implemented with the user interface 302 of FIG. 3, the control unit 308 of FIG. 3, the software 312 of FIG. 3, or a combination thereof.

Also for example, the interface module 504 can be implemented with the navigation system 400 of FIG. 4. The interface module 504 can be implemented with the first user interface 418 of FIG. 4, the first control unit 412 of FIG. 4, the first software 422 of FIG. 4, the second user interface 430 of FIG. 4, the second control unit 424 of FIG. 4, the second software 432 of FIG. 4, or a combination thereof.

The interface module 504 can receive a single utterance 506, which can include the user's request made entirely in one attempt, of the spoken input 502. The single utterance 506 can be made without having the navigation system 500 outputting multiple prompts or requests. For example, the single utterance 506 can be "Kifer Road and Lawrence Expressway in Sunnyvale California" for making an entire request to locate an intersection at "Kifer Road and Lawrence Expressway" in "Sunnyvale California".

For example, the single utterance 506 can be made by having a user entering entirely the spoken input 202 of FIG. 2 in one attempt. In this example, the navigation system 500 can perform tasks, such as decoding, parsing, and recognizing, for validating the user's desired location 204 of FIG. 2.

The interface module 504 can receive the spoken input 502 as raw audio data 508, which can include speech information that has not been processed during a speech recognition flow. The raw audio data 508 can be recorded. The raw audio data 508 can be in compressed audio formats from different devices, such as Adaptive Multi-Rate (AMR) compression format from Research In Motion (RIM) devices, Global System for Mobile (GSM) communications format from Windows Mobile (WM) devices, and Third Generation Partnership Project (3GPP) format from gPhone devices, as examples.

The raw audio data 508 is sent from the interface module 504 to a decode module 510, which can be a module that includes functions for de-coding or de-compressing speech information from a compressed format to an appropriate format that can be interpreted. For example, the decode module 510 can be implemented with the navigation system 300 of FIG. 3. The decode module 510 can be implemented with the control unit 308 of FIG. 3, the software 312 of FIG. 3, or a combination thereof.

Also for example, the decode module 510 can be implemented with the navigation system 400 of FIG. 4. The decode module 510 can be implemented with the first control unit 412 of FIG. 4, the first software 422 of FIG. 4, the second control unit 424 of FIG. 4, the second software 432 of FIG. 4, or a combination thereof.

The decode module 510 can un-compress or convert the raw audio data 508 into a uniformed format, preferably pulse-code modulation (PCM), or other formats such as differential pulse-code modulation (DPCM), adaptive differential pulse-code modulation (ADPCM), or delta modulation (DM), as examples. Additionally, the decode module 510 can trim or remove leading and trailing duration of silence in the raw audio data 508 to generate decoded data 512 of the single utterance 506 of the spoken input 502.

Parsing data can be performed at various stages, preferably after performing speech recognition or decoding the raw audio data 508. Parsing data can be performed by a parse module 514, which is can be a module that includes functions for interpreting the content of a user's request. The flow chart depicts the parse module interpreting data after performing speech recognition.

For example, the parse module 514 can be implemented with the navigation system 300 of FIG. 3. The parse module 514 can be implemented with the control unit 308 of FIG. 3, the software 312 of FIG. 3, or a combination thereof.

Also for example, the parse module 514 can be implemented with the navigation system 400 of FIG. 4. The parse module 514 can be implemented with the first control unit 412 of FIG. 4, the first software 422 of FIG. 4, the second control unit 424 of FIG. 4, the second software 432 of FIG. 4, or a combination thereof.

The parse module 514 parses the recognized data (e.g. recognized text string) or the decoded data 512 to interpret the content of the recognized data or the decoded data 512 by separating the recognized data or the decoded data 512 into a field 566, which can include a phrase or a group of one or more words of the spoken input 502. The parse module 514 separates the recognized data or the decoded data 512 into the field 566 with a navigation preposition syntax 516, which can include a rule for entering the spoken input 502 using a preposition 568, which can include a word that adjoins one or more of the field 566 or indicates where about the inquired location is. For example, the preposition 568 can be "and", "in", "on", "near", "at", "from", or "to", as examples. The parse module 514 separates the recognized data or the decoded data 512 into the field 566 by recognizing the preposition 568.

For example, the navigation preposition syntax 516 can specify that the spoken input 502 can be entered as "Gas Station near Mathilda and El Camino". The parse module 514 can separate the recognized data or the decoded data 512 of the spoken input 502 into the field 566 "Gas Station" and the field 566 "Mathilda and El Camino" by recognizing the preposition 568 "near".

Also for example, the field 566 "Mathilda and El Camino" can be further separated into the field 566 "Mathilda" and the field 566 "El Camino" by recognizing the preposition 568 "and". As described in the previous examples, the parse module 514 can parse the recognized data or the decoded data 512 of the spoken input 502 with the navigation preposition syntax 516.

In another example, suppose the content of the recognized data or the decoded data 512 includes "Kifer Road and Lawrence Expressway in Sunnyvale California". The parse module 514 can separate the recognized data or the decoded data 512 into the field 566 "Kifer Road", the field 566 "Lawrence Expressway", and the field 566 "Sunnyvale California" by recognizing the preposition 568 "and" and the preposition 568 "in".

The parse module 514 can parse the recognized data or the decoded data 512 to interpret that the recognized data or the decoded data 512 includes an address 518, which can include a designation of a location where, for example, a letter or parcel can be delivered to. For example, the recognized data or the decoded data 512 can include "1130 Kifer Road Sunnyvale California". In this example, the recognized data or the decoded data 512 can be parsed as to include the address 518.

The parse module 514 can parse the recognized data or the decoded data 512 to interpret that the recognized data or the decoded data 512 includes an intersection 520, which can include a place where two or more streets cross. For example, the recognized data or the decoded data 512 can include "Kifer Road and Lawrence Expressway in Sunnyvale California". The recognized data or the decoded data 512 can be parsed into the field 566 "Kifer Road" which is part of the intersection 520, the field 566 "Lawrence Expressway" which is also part of the intersection 520, and the field 566 "Sunnyvale California" which is where the intersection 520 is located by recognizing the preposition 568 "and" and the preposition 568 "in". In this example, the recognized data or the decoded data 512 can be parsed as to include the intersection 520.

The parse module 514 can parse the recognized data or the decoded data 512 to interpret that the recognized data or the decoded data 512 includes a point of interest 522 (POI), which can include a type of location that a user finds interesting or useful such as gas station, restaurant, store, rest area, or post office as examples. For example, the recognized data or the decoded data 512 can include "Gas Station in Sunnyvale California". The recognized data or the decoded data 512 can be parsed into the field 566 "Gas Station" which is the point of interest 522 and the field 566 "Sunnyvale California" which is where the point of interest 522 is located by recognizing the preposition 568 "in". In this example, the recognized data or the decoded data 512 can be parsed as to include the point of interest 522.

The parse module 514 can parse the recognized data or the decoded data 512 to interpret that the recognized data or the decoded data 512 includes a listing 524, which can include a name of a company, a store, or a restaurant as examples. For example, the recognized data or the decoded data 512 can include "TeleNav in Sunnyvale California". The recognized data or the decoded data 512 can be parsed into the field 566 "TeleNav" which is the listing 524 and the field 566 "Sunnyvale California" which is where the listing 524 is located by recognizing the preposition 568 "in". In this example, the recognized data or the decoded data 512 can be parsed as to include the listing 524.

The parse module 514 can parse the recognized data or the decoded data 512 to interpret that the recognized data or the decoded data 512 includes a route 526, which can include a path from an origin to a destination. Each of the origin and the destination can include the address 518, the intersection 520, the point of interest 522, or the listing 524, as examples.

For example, the recognized data or the decoded data 512 can include "from Sunnyvale California to Sacramento California". The recognized data or the decoded data 512 can be parsed into the field 566 "Sunnyvale California" as the origin and the field 566 "Sacramento California" as the destination by recognizing the preposition 568 "from" as a key word preceding the origin and the preposition 568 "to" as a key word preceding the destination. In this example, the recognized data or the decoded data 512 can be parsed as to include the route 526.

The navigation system 500 can include a past usage 528, which can include information about the previous entry of the spoken input 502. The past usage 528 can include location or address information from the previous identification of the spoken input 502 interpreted as the address 518, the intersection 520, the point of interest 522, the listing 524, or the route 526. For example, the past usage 528 can include location information of the point of interest 522 of the previous entry.

For example, the recognized data or the decoded data 512 can include "Restaurant Past Usage". The recognized data or the decoded data 512 can be parsed into the field 566 "Restaurant" which is the point of interest 522 and the field 566 "Past Usage" as an indication that the user requests for the point of interest 522 based on the past usage 528. In this example, the navigation system 500 can determine a restaurant or a list of restaurants near the location of the past usage 528.

The past usage 528 can include information that recognizes how the user enters the spoken input 502 in the previous entry. For example, the user enters a part of the spoken input 502 as "California Sunnyvale". In this example, the order of entering the city "Sunnyvale" and the state "California" is swapped as compared to a typical entry order of a city followed by a state.

The navigation system 500 can include a current location 530, which can include address or location information indicating where a device is currently located. For example, the current location 530 can include a current location reading of the device, such as the navigation system 300 of FIG. 3 or the first device 402 of FIG. 4.

For example, the recognized data or the decoded data 512 can include "Gas Station Current Location". The recognized data or the decoded data 512 can be parsed into the field 566 "Gas Station" which is the point of interest 522 and the field 566 "Current Location" which is an indication that the user requests for the point of interest 522 based on the current location 530. In this example, the navigation system 500 can determine a gas station or a list of gas stations near the current location 530.

The navigation system 500 includes a calendar 532, which can include an organization of information of a user's planned events on certain specified dates and times. For example, the calendar 532 can include information of date and location of the user's meetings and appointments.

For example, the recognized data or the decoded data 512 can include "Store Calendar March 20 2009". The recognized data or the decoded data 512 can be parsed into the field 566 "Store" which is the point of interest 522, the field 566 "Calendar" which is an indication that that the user requests for the point of interest 522 based on the calendar 532, and the field 566 "March 20 2009" which is a date in the calendar 532. In this example, the navigation system 500 can determine a store or a list of stores near an address, at which an appointment or a meeting has been scheduled to occur on March 20 2009, based on the calendar 532.

The parse module 514 can receive the past usage 528, the current location 530, and the calendar 532. For example, the parse module 514 can receive the past usage 528, the current location 530, and the calendar 532 from the storage unit 304 of FIG. 3. Also for example, the parse module 514 can receive the past usage 528, the current location 530, and the calendar 532 from the first storage unit 414 of FIG. 4, the second storage unit 426 of FIG. 4, or a combination thereof. The current location 530, the past usage 528, and the calendar 532 can be generated by the navigation system 500 or can be received from another device.

The parse module 514 can interface with the interface module 504 to indicate that an error 536 has occurred. The parse module 514 can detect the error 536 due to invalid or incomplete information in the recognized data or the decoded data 512, as an example. For example, the recognized data or the decoded data 512 can include only "Calendar" without any one of the address 518, the intersection 520, the point of interest 522, the listing 524, or the route 526. In this example, the parse module 514 is unable to process incomplete information in the recognized data or the decoded data 512.

The parse module 514 can generate parsed data 534, which can include information interpreted from the recognized data or the decoded data 512. The parsed data 534 can include part of or all of the information from the recognized data or the decoded data 512, control information generated by the parse module 514 for identifying that the parsed data 534 include the address 518, the intersection 520, the point of interest 522, the listing 524, or the route 526, and location information generated by the parse module 514 based on the past usage 528, the current location 530 and, according to the invention, the calendar 532.

For example, the recognized data or the decoded data 512 can include "Restaurant Past Usage". The recognized data or the decoded data 512 can be parsed into the field 566 "Restaurant" which is the point of interest 522 and the field 566 "Past Usage" as an indication that the user requests for the point of interest 522 based on the past usage 528. The parse module 514 can insert the address or location information in the parsed data 534 based on the past usage 528. In this example, the navigation system 500 can determine a restaurant or a list of restaurants near the location of the past usage 528.

For example, the recognized data or the decoded data 512 can include "Gas Station Current Location". The recognized data or the decoded data 512 can be parsed into the field 566 "Gas Station" which is the point of interest 522 and the field 566 "Current Location" which is an indication that the user requests for the point of interest 522 based on the current location 530. The parse module 514 can insert the address or location information in the parsed data 534 based on the current location 530. In this example, the navigation system 500 can determine a gas station or a list of gas stations near the current location 530.

For example, in accordance with the invention, the recognized data or the decoded data 512 can include "Store Calendar March 20 2009". The recognized data or the decoded data 512 can be parsed into the field 566 "Store" which is the point of interest 522, the field 566 "Calendar" which is an indication that that the user requests for the point of interest 522 based on the calendar 532, and the field 566 "March 20 2009" which is a date in the calendar 532. The parse module 514 can insert the address or location information in the parsed data 534 based on the calendar 532. In this example, the navigation system 500 can determine a store or a list of stores near an address, at which an appointment or a meeting has been scheduled to occur on March 20 2009, based on the calendar 532.

The decoded data 512 or the parsed data 534 is sent from the decode module 510 or the parse module 514, respectively, to a region recognize module 538, which can be a module that includes functions for comparing phonemes of a sub-national entity and one of its regions from the user's request to those in a list of regions and sub-national entities for finding a match or best match. For example, the region recognize module 538 can be implemented with the navigation system 300 of FIG. 3. The region recognize module 538 can be implemented with the control unit 308 of FIG. 3, the software 312 of FIG. 3, or a combination thereof.

Also for example, the region recognize module 538 can be implemented with the navigation system 400 of FIG. 4. The region recognize module 538 can be implemented with the first control unit 412 of FIG. 4, the first software 422 of FIG. 4, the second control unit 424 of FIG. 4, the second software 432 of FIG. 4, or a combination thereof.

The region recognize module 538 can receive the decoded data 512 or the parsed data 534 from the decode module 510 or the parse module 514, respectively. The region recognize module 538 can recognize a city 540, which can include an urban area such as metropolis or group of suburbs, and a state 542, which can include a sub-national entity including a group of cities and/or counties, a province, or a canton, in the decoded data 512 or the parsed data 534.

The region recognize module 538 can recognize the city 540 and the state 542 based on a region language model 544, which can include a model with a list including sub-national entities and their corresponding regions and probability assigned to a sequence of phonemes for predicting words in a speech sequence. For example, the region language model 544 can be a stochastic language model (SLM) or a statistical language model (SLM). The region language model 544 can include a complete list of regions, such as cities and states in the location identifier 206 example in FIG. 2.

For illustrative purposes, the decoded data 512 or the parsed data 534 includes the city 540 and the state 542, although it is understood that the decoded data 512 or the parsed data 534 can include other regional information. For example, the decoded data 512 or the parsed data 534 can include information about county, province, country, or any other regional information as appropriate.

For example, the region language model 544 can be provided by the navigation system 300 of FIG. 3. The region language model 544 can be stored in the storage unit 304 of FIG. 3. Also for example, the region language model 544 can be provided by the navigation system 400 of FIG. 4. The region language model 544 can be stored in the first storage unit 414 of FIG. 4, the second storage unit 426 of FIG. 4, or a combination thereof.

The region language model 544 can include a complete list of the city 540 in the state 542. The region language model 544 can be trained by the region recognize module 538 based on the city 540, the state 542, any other regional information, or any combination thereof. The region recognize module 538 can train by obtaining statistical relationship between or among words, which can be groups of various phonemes, based on the region language model 544.

The region language model 544 can be provided as a binary file that can be read and loaded into the region recognize module 538. The region language model 544 can include sentences, which are defined as sequences of words that can include regional information such as the city 540 and the state 542.

For example, the region language model 544 can include "placerville california", where "placerville" is the city 540 and "california" is the state 542. As another example, the region language model 544 can include "manteca california", where "manteca" is the city 540 and "california" is the state 542.

The region recognize module 538 can generate a search region 546 from the spoken input 502 with the region language model 544. The region recognize module 538 with the region language model 544 can generate the search region 546 such as an urban area to be searched for street information. The search region 546 can be generated by a process including recognizing the city 540 and the state 542 in the region language model 544. Recognizing the city 540 and the state 542 can include finding a match or best match of the city 540 and the state 542 in the region language model 544.

For example, the city 540 and the state 542 of the decoded data 512 or the parsed data 534 can be "placerville" and "california", respectively, and the region language model 544 can include "placerville california". In this example, the region recognize module 538 can generate the search region 546 as "placerville california" with the city 540 and the state 542 matched "placerville" and "california", respectively, in the region language model 544.

The region recognize module 538 can determine a match or best match based on a confidence score 548, which can include a value indicating how probable a result of a recognition operation matches what a user speaks, and a threshold 550, which can include a comparison level. The region recognize module 538 can calculate the confidence score 548 based on statistical or probability information among the words in the region language model 544. The region recognize module 538 can determine the match of the city 540 and the state 542 based on the confidence score 548 that is a maximum value. The best match of the city 540 and the state 542 can be determined based on the confidence score 548 that is highest and is greater than the threshold 550, which can be programmed or configured in the navigation system 500.

The region recognize module 538 can recognize the city 540 and the state 542 of the decoded data 512 or the parsed data 534 independent in the order thereof based on the region language model 544. For example, the decoded data 512 or the parsed data 534 can include "California Sunnyvale". In this example, the region recognize module 538 can recognize "Sunnyvale" as the city 540 and "California" as the state 542.

The order of the city 540 and the state 542 can be provided by the region recognize module 538 so that it can be saved as part of the past usage 528 for subsequent processing in the parse module 514 for the spoken input 502. Supporting such order independence can provide flexibility for supporting unconstrained speech input.

For illustrative purposes, the search region 546 includes the match or best match of the city 540 and the state 542 of the decoded data 512 or the parsed data 534, although it is understood that the search region 546 can include the match or best match of any regional information. For example, the search region 546 can include the match or best match of any combination of the city 540, the county, the state 542, the province, the country, and any other regional information, as examples.

For example, the parse module 514 can parse to interpret that the recognized data or the decoded data 512 includes "Gas Station Current Location". The parse module 514 can insert the city 540 and the state 542 of the current location 530. The parse module 514 can insert the city 540 and the state 542 in the parsed data 534 and sends to a location identifier generate module 562 or the region recognize module 538.

In accordance with the invention, the parse module 514 can parse to interpret that the recognized data or the decoded data 512 includes "Store Calendar March 20 2009". The parse module 514 can insert the city 540 and the state 542 of a calendar address, at which an appointment or a meeting has been scheduled to occur on March 20 2009, based on the calendar 532. The parse module 514 can insert the city 540 and the state 542, which are searched and identified in the calendar 532, in the parsed data 534 and sends to the location identifier generate module 562 or the region recognize module 538.

The region recognize module 538 can generate the search region 546 by searching the region language model 544 to recognize the city 540 and the state 542. In the previous examples, the navigation system 500 can provide the parse module 514 and the region recognize module 538 for generating the search region 546 by searching the region language model 544 based on the current location 530 or, in accordance with the invention, based on the calendar 532. That is, the parse module 514 can parse to interpret the recognized data or the decoded data 512

by searching the calendar 532 for identifying the city 540 and the state 542 in the calendar 532 which contains the user's appointments or meetings, and the region recognize module 538 can generate the search region 546 by searching the region language model 544 with the city 540 and the state 542.

The region recognize module 538 can interface with the interface module 504 to indicate that a condition of the error 536 has occurred. The region recognize module 538 can detect the error 536 due to a low setting of the threshold 550, as an example. For example, with a low setting of the threshold 550, the confidence score 548 can be less than the threshold 550. In this example, the region recognize module 538 is unable to determine the search region 546.

The region recognize module 538 can generate the search region 546 from the spoken input 502 with the region language model 544. As previously described, the spoken input 502 can be received in the single utterance 506 by the interface module 504, processed by the decode module 510 for generating the decoded data 512, parsed and interpreted with the recognized data or the decoded data 512 based on the past usage 528, the current location 530, or, in accordance with the invention, the calendar 532, as the address 518, the intersection 520, the point of interest 522, the listing 524, or the route 526 by the parse module 514 for generating the parsed data 534, and recognized by the region recognize module 538 for generating the search region 546 matched or best matched to the decoded data 512 or the parsed data 534 based on the region language model 544.

The search region 546 is sent from the region recognize module 538 to a sub-region recognize module 552, which can be a module that includes functions for searching for location information with a list including streets, point of interests, listings, other country or local specific location designation, or any combination thereof per the search region 546. For example, the sub-region recognize module 552 can be implemented with the navigation system 300 of FIG. 3. The sub-region recognize module 552 can be implemented with the control unit 308 of FIG. 3, the software 312 of FIG. 3, or a combination thereof.

Also for example, the sub-region recognize module 552 can be implemented with the navigation system 400 of FIG. 4. The sub-region recognize module 552 can be implemented with the first control unit 412 of FIG. 4, the first software 422 of FIG. 4, the second control unit 424 of FIG. 4, the second software 432 of FIG. 4, or a combination thereof.

The navigation system 500 can include the sub-region recognize module 552 for searching a sub-region search grammar 558, which can include a list including location information such as streets, point of interests, listings, other country or local specific location designation, or any combination thereof per the search region 546, in conjunction with the region recognize module 538 for searching the region language model 544. The search region 546 can be used as an index or a pointer for searching the sub-region search grammar 558.

For example, the sub-region search grammar 558 can be provided by the navigation system 300 of FIG. 3. The sub-region search grammar 558 can be stored in the storage unit 304 of FIG. 3. Also for example, the sub-region search grammar 558 can be provided by the navigation system 400 of FIG. 4. The sub-region search grammar 558 can be stored in the first storage unit 414 of FIG. 4, the second storage unit 426 of FIG. 4, or a combination thereof.

The sub-region search grammar 558 can be provided in a format, such as Augmented Backus-Naur Form (ABNF), Speech Recognition Grammar Specification (SRGS), Grammar Extensible Markup Language (grXML), or JAVA Speech Grammar Format (JSGF), as examples. The sub-region search grammar 558 can be searched based on the search region 546.

The sub-region recognize module 552 can receive the search region 546 from the region recognize module 538. The sub-region recognize module 552 can receive the decoded data 512 from the decode module 510 or the parsed data 534 from the parse module 514. The sub-region recognize module 552 can receive the decoded data 512 or the parsed data 534 via the region recognize module 538.

Information in the decoded data 512 or the parsed data 534 that can be processed by the sub-region recognize module 552 can include information related to the address 518, the intersection 520, the point of interest 522, the listing 524, or the route 526, as examples. For example, such information can be an address number 554, which can include number that is part of the address 518, and a street 556, which can include a way for passage in the city 540, town, or village, as examples.

The navigation system 500 can include the sub-region search grammar 558 for providing accuracy in supporting constrained rule with a list of the address number 554 and the street 556 per the search region 546. The sub-region search grammar 558 can include information or a list of the point of interest 522 and the listing 524, for recognizing the decoded data 512 or the parsed data 534 that includes the point of interest 522 or the listing 524, as examples.

The sub-region recognize module 552 can recognize the address number 554 and the street 556 of the decoded data 512 or the parsed data 534 based on the sub-region search grammar 558. For example, the sub-region search grammar 558 can be a file system using a directory structure based on the city 540 and the state 542. The directory structure can include a list of the directories, in which each directory can include information of the address number 554 and the street 556.

For example, the directory structure can include the directories "/grammars/streets_per_city/US/California/Sunnyvale.gram", "/grammars/streets_per_city/US/California/San_Jose.gram", and "/grammars/streets_per_city/US/Washington/Seattle.gram". In this example, the address number 554 and the street 556 information can be provided in the city 540 "Sunnyvale" of the state 542 "California", the city 540 "San_Jose" of the state 542 "California", and the city 540 "Seattle" of the state 542 "Washington" in the first, second, and third directories, respectively.

In the previous example, the sub-region search grammar 558 with the directory "/grammars/streets_per_city/US/California/Sunnyvale.gram" can be searched with the search region 546 as "Sunnyvale California", where "Sunnyvale" is the city 540 and "California" is the state 542. The sub-region recognize module 552 can recognize the address number 554 and the street 556 by searching for the address number 554 and the street 556 in the directory "/grammars/streets_per_city/US/California/Sunnyvale.gram" in the sub-region search grammar 558.

The sub-region recognize module 552 can use the search region 546 as an index or a pointer to search the sub-region search grammar 558. The sub-region recognize module 552 can identify a sub-region 560, which can include street information found in the sub-region search grammar 558 based on the search region 546. The sub-region 560 can be a match of the address number 554 and the street 556.

As an example, the search region 546 "Sunnyvale California" of the previous example can be used as an index or a pointer to point to the "/grammars/streets_per_city/US/California/Sunnyvale.gram" directory in the sub-region search grammar 558. This directory can be used for searching to identify the sub-region 560.

Also for example, the decoded data 512 or the parsed data 534 can include "Sunnyvale California". In this example, the navigation system 500 can use a default address, such as an address of a city hall or an address of a center location, of the city 540 "Sunnyvale" in the state 542 "California" for determining the address number 554 and the street 556.

The sub-region recognize module 552 can interface with the interface module 504 to indicate that a condition of the error 536 has occurred. The sub-region recognize module 552 can detect the error 536 due to an invalid or incomplete name of the street 556 in the decoded data 512 or the parsed data 534, as an example. For example, the street 556 can be "Lence Expressway" in the search region 546 "Sunnyvale California", and the sub-region search grammar 558 can include "Lawrence Expressway" in the search region 546 "Sunnyvale California". In this example, the sub-region recognize module 552 is unable to search for "Lence Expressway" in the search region 546 "Sunnyvale California". The sub-region 560 is sent from the sub-region recognize module 552 to the parse module 514 or the location identifier generate module 562, which can be a module including functions for receiving the results of the speech recognition and producing a designation of the location inquired by the user. The location identifier generate module 562 can receive the search region 546 from the region recognize module 538 or via the sub-region recognize module 552.

The sub-region recognize module 552 can generate the recognized data including the search region 546 and the sub-region 560. The recognized data can be sent to the parse module 514. The decoded data 512 can also be sent to the parse module 514 for interpreting the spoken input 502 with the user's inquiry such as an inquiry including the past usage 528, the current location 530, the calendar 532, or a combination thereof.

The location identifier generate module 562 can receive location information from the parse module 514 or via the sub-region recognize module 552. The location information from the parse module 514 can be address or location information of the address 518, the intersection 520, the point of interest 522, the listing 524, or the route 526 based on the past usage 528, the current location 530, or, in accordance with the invention, the calendar 532. For example, such location information can be an address of the spoken input 502 interpreted as the listing 524 near the current location 530.

For example, the location identifier generate module 562 can be implemented with the navigation system 300 of FIG. 3. The location identifier generate module 562 can be implemented with the control unit 308 of FIG. 3, the software 312 of FIG. 3, or a combination thereof.

Also for example, the location identifier generate module 562 can be implemented with the navigation system 400 of FIG. 4. The location identifier generate module 562 can be implemented with the first control unit 412 of FIG. 4, the first software 422 of FIG. 4, the second control unit 424 of FIG. 4, the second software 432 of FIG. 4, or a combination thereof.

The location identifier generate module 562 can generate a location identifier 564, which can include a designation of the location inquired by the user. The location identifier 564 can be generated based on the search region 546, the sub-region 560, and any other information related to the spoken input 502. The location identifier 564 can represent the location identifier 206 of FIG. 2.

For example, the spoken input 502 is interpreted as the address 518. The location identifier generate module 562 generates the location identifier 564 based on the sub-region 560 and the search region 546.

Also for example, the spoken input 502 is interpreted as the listing 524 based on the current location 530. The location identifier generate module 562 generates the location identifier 564 for the listing 524 near the current location 530 with the address or location information of the current location 530 from the parse module 514.

The location identifier generate module 562 can generate the location identifier 564 from the spoken input 502. The spoken input 502 can be received in the single utterance 506 by the interface module 504, processed by the decode module 510 for generating the decoded data 512, parsed and interpreted with the navigation preposition syntax 516 and either the recognized data or the decoded data 512 based on the past usage 528, the current location 530, or, in accordance with the invention, the calendar 532, as the address 518, the intersection 520, the point of interest 522, the listing 524, or the route 526 by the parse module 514 for generating the parsed data 534, recognized by the region recognize module 538 for generating the search region 546 matched or best matched to the decoded data 512 or the parsed data 534 based on the region language model 544, and searched by the sub-region recognize module 552 for generating the sub-region 560 based on the sub-region search grammar 558 indexed by the search region 546.

As described previously, the location identifier generate module 562 can generate the location identifier 564 based on the sub-region search grammar 558 and the search region 546. The location identifier 564 can be the sub-region 560, which can be found in the sub-region search grammar 558, and the search region 546. The location identifier 564 can be sent from the location identifier generate module 562 to the interface module 504 for displaying on a device, such as the first device 102 of FIG. 1, the navigation system 300 of FIG. 3, or the first device 402 of FIG. 4, as examples.

It has been discovered that the present invention provides the navigation system 500 providing flexibility and accuracy. The navigation system 500 can provide flexibility in supporting unconstrained speech input with the region language model 544 and accuracy in supporting constrained rule with the sub-region search grammar 558. The navigation system 500 adapts to or learns the preferred speech pattern or format of the unconstrained speech of the spoken input 502. For example, the spoken input 502 can have the full street address such as the address number 554, the street 556, the city 540, and the state 542. The spoken input 502 may include only the point of interest 522 and the navigation system 500 can attempt different matching approaches to the spoken input 502. As an example, the navigation system 500 can search location entries on the calendar 532 to fill in the details required by the region language model 544 or the sub-region search grammar 558 to be used with the point of interest 522 entry of the spoken input 502.

The physical transformation of the single utterance 506 of the spoken input 502 with the region language model 544 and the sub-region search grammar 558 to the address 518, the intersection 520, the point of interest 522 (POI), the listing 524, or the route 526 results in movement in the physical world, such as people using the first device 102 of FIG. 1, the navigation system 300 of FIG. 3, the first device 402 of FIG. 4, the navigation system 500, or vehicles, based on the operation of the navigation system 500. As the movement in the physical world occurs, the movement itself creates additional information that is converted back to the data for further processing with the region language model 544, the sub-region search grammar 558, the address 518, the intersection 520, the point of interest 522 (POI), the listing 524, and the route 526 for the continued operation of the navigation system 500 and to continue the movement in the physical world.

It has been found that the present invention provides the navigation system 500 providing usability for enhancing the user's experience. The navigation system 500 can provide usability with the single utterance 506 of the spoken input 502 in one attempt without having the navigation system 500 outputting multiple prompts or requests. By using the single utterance 506, the navigation system 500 can reduce latency and improves performance particularly in a network with limited bandwidth and speed.

It has also been discovered that the present invention provides the navigation system 500 providing further flexibility. The navigation system 500 can provide further flexibility in supporting parsing to interpret with the navigation preposition syntax 516 that the recognized data or the decoded data 512 includes the address 518, the intersection 520, the point of interest 522 (POI), the listing 524, or the route 526, as examples.

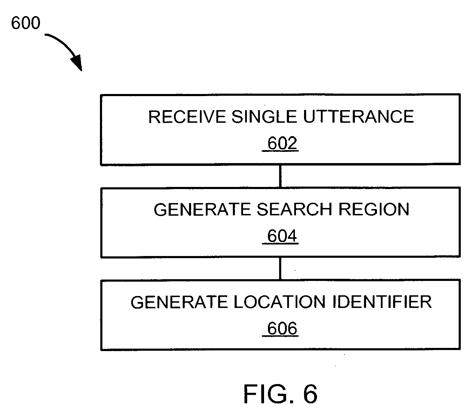

Referring now to FIG. 6, therein is shown a flow chart of a method 600 of operation of a navigation system with speech processing mechanism . The method 600 includes: receiving a single utterance of a spoken input in a module 602; generating a search region from the spoken input with a region language model in a module 604; and generating a location identifier based on a sub-region search grammar and the search region for displaying on a device in a module 606.

Yet another important aspect of the present invention is that it valuably supports and services the historical trend of reducing costs, simplifying systems, and increasing performance. These and other valuable aspects of the present invention consequently further the state of the technology to at least the next level.

Thus, it has been discovered that the navigation system of the present invention furnishes important and heretofore unknown and unavailable solutions, capabilities, and functional aspects for improving performance, increasing reliability, increasing safety and reducing cost of using a mobile client having location based services capability. The resulting processes and configurations are straightforward, cost-effective, uncomplicated, highly versatile, accurate, sensitive, and effective, and can be implemented by adapting known components for ready, efficient, and economical manufacturing, application, and utilization.

While the invention has been described in conjunction with a specific best mode, it is to be understood that many alternatives, modifications, and variations can be apparent to those skilled in the art in light of the aforegoing description. Accordingly, it is intended to embrace all such alternatives, modifications, and variations that fall within the scope of the included claims. All matters hithertofore set forth herein or shown in the accompanying drawings are to be interpreted in an illustrative and non-limiting sense.

## Claims

1. A method of operation of a navigation system comprising:
receiving a single utterance of a spoken input;
performing speech recognition to generate recognized data including a calendar date from the received single utterance;
parsing the recognized data such as to generate parsed data by separating the recognized data into a field, including a phrase or one or more words of the spoken input, using a navigation preposition syntax wherein the recognized data is separated into fields by recognizing prepositions;
generating a search region matched or best matched to the parsed data based on a region language model; and
generating a location identifier based on a sub-region search grammar indexed by the search region for displaying on a device,
wherein the navigation system includes a calendar (532), and wherein parsing the recognized data comprises:
parsing the recognized data into a point of interest field, a "Calendar" field which is an indication that a user requests for the point of interest based on the calendar, and a date field; and
inserting the address or location information into the parsed data (534) based on the calendar.

2. The method as claimed in claim 1 wherein generating the search region includes generating the search region based on a confidence score.

3. The method as claimed in claim 1 further comprising parsing a past usage of a previous entry of the spoken input.

4. The method as claimed in claim 1 wherein generating the location identifier includes interpreting the spoken input as an address, an intersection, a point of interest, a listing, or a route.

5. A navigation system comprising:
a user interface for receiving a single utterance of a spoken input; and
a control unit, coupled to the user interface,
the control unit being adapted to:
perform speech recognition to generate recognized data including a calendar date from the received single utterance,
parse the recognized data such as to generate parsed data by separating the recognized data into a field, including a phrase or one or more words of the spoken input, using a navigation preposition syntax wherein the recognized data is separated into fields by recognizing prepositions,
generate a search region matched or best matched to the parsed data based on a region language model; and
generate a location identifier based on a sub-region search grammar indexed by the search region for displaying on a device,
wherein the navigation system includes a calendar (532), and wherein to parse the recognized data comprises :
parsing the recognized data into a point of interest field, a "Calendar" field which is an indication that a user requests for the point of interest based on the calendar, and a date field; and
inserting the address or location information into the parsed data (534) based on the calendar.

6. The system as claimed in claim 5 wherein the control unit is for generating the search region based on a confidence score.

7. The system as claimed in claim 5 wherein the control unit is for parsing a past usage of a previous entry of the spoken input.

8. The system as claimed in claim 5 wherein the control unit is for interpreting the spoken input as an address, an intersection, a point of interest, a listing, or a route.

## Patentansprüche

1. Verfahren zum Betreiben eines Navigationssystems, umfassend:
Empfangen einer einzelnen Äußerung einer gesprochenen Eingabe;
Durchführen einer Spracherkennung, um erkannte Daten, die ein Kalenderdatum enthalten, aus der empfangenen einzelnen Äußerung zu erzeugen;
Parsen der erkannten Daten, um geparste Daten zu erzeugen, indem die erkannten Daten in ein Feld aufgeteilt werden, das eine Phrase oder ein oder mehrere Wörter der gesprochenen Eingabe umfasst, unter Verwendung einer Navigations-Präpositionssyntax, wobei die erkannten Daten durch Erkennen von Präpositionen in Felder aufgeteilt werden;
Erzeugen eines Suchbereichs, der mit den geparsten Daten übereinstimmt oder am besten übereinstimmt, auf der Basis eines Regionen-Sprachmodells; und
Erzeugen eines Orts-Identifizierungsmerkmals auf der Basis einer Unterregionen-Suchgrammatik, die durch den Suchbereich indiziert wird, zur Anzeige auf einem Gerät,
wobei das Navigationssystem einen Kalender (532) umfasst, und wobei das Parsen der erkannten Daten umfasst:
Parsen der erkannten Daten in ein Sonderziel-Feld, ein "Kalender"-Feld, das angibt, dass ein Benutzer das Sonderziel auf der Grundlage des Kalenders anfordert, und ein Datums-Feld; und
Einfügen der Adress- oder Ortsinformation in die geparsten Daten (534) auf der Basis des Kalenders.

2. Verfahren nach Anspruch 1, wobei das Erzeugen des Suchbereichs das Erzeugen des Suchbereichs auf der Basis eines Vertrauenswertes umfasst.

3. Verfahren nach Anspruch 1, mit dem weiteren Schritt des Parsens einer vergangenen Verwendung eines vorherigen Eintrags der gesprochenen Eingabe.

4. Verfahren nach Anspruch 1, wobei das Erzeugen des Orts-Identifikationsmerkmals das Interpretieren der gesprochenen Eingabe als eine Adresse, eine Kreuzung, ein Sonderziel, ein Verzeichnis oder eine Route umfasst.

5. Navigationssystem, umfassend:
eine Benutzerschnittstelle zum Empfangen einer einzelnen Äußerung einer gesprochenen Eingabe; und
eine Steuereinheit, die mit der Benutzerschnittstelle gekoppelt ist, wobei die Steuereinheit dazu geeignet ist:
Spracherkennung auszuführen, um erkannte Daten, die ein Kalenderdatum umfassen, aus der empfangenen einzelnen Äußerung zu erzeugen;
die erkannten Daten zu parsen, um geparste Daten zu erzeugen, indem die erkannten Daten in ein Feld aufgeteilt werden, das eine Phrase oder ein oder mehrere Wörter der gesprochenen Eingabe umfasst, unter Verwendung einer Navigations-Präpositionssyntax, wobei die erkannten Daten durch Erkennen von Präpositionen in Felder aufgeteilt werden;
einen Suchbereich auf der Basis eines Regionen-Sprachmodells zu erzeugen, der mit den geparsten Daten übereinstimmt oder am besten übereinstimmt; und
ein Orts-Identifizierungsmerkmal auf der Basis einer Unterregionen-Suchgrammatik, die von dem Suchbereich indiziert wird, zur Anzeige auf einem Gerät zu erzeugen,
wobei das Navigationssystem einen Kalender (532) umfasst und wobei das Parsen der erkannten Daten umfasst:
das Parsen der erkannten Daten in ein Sonderziel-Feld, ein "Kalender"-Feld, das angibt, dass ein Benutzer auf der Basis des Kalenders das Sonderziel anfordert, und ein Datums-Feld; und
Einfügen der Adress- oder Ortsinformation in die geparsten Daten (534) auf der Basis des Kalenders.

6. System nach Anspruch 5, wobei die Steuereinheit dazu dient, den Suchbereich auf der Grundlage eines Vertrauenswertes zu erzeugen.

7. System nach Anspruch 5, wobei die Steuereinheit dazu dient, eine vergangene Nutzung eines vorherigen Eintrags der gesprochenen Eingabe zu parsen.

8. System nach Anspruch 5, wobei die Steuereinheit dazu dient, die gesprochene Eingabe als eine Adresse, eine Kreuzung, ein Sonderziel, ein Verzeichnis oder eine Route zu interpretieren.

## Revendications

1. Procédé d'exploitation d'un système de navigation, comprenant les étapes ci-dessous consistant à :
recevoir un énoncé unique d'une entrée parlée ;
mettre en oeuvre une reconnaissance vocale en vue de générer des données reconnues incluant une date calendaire, à partir de l'énoncé unique reçu ;
analyser les données reconnues de manière à générer des données analysées, en séparant les données reconnues en un champ, incluant une locution ou un ou plusieurs mots de l'entrée parlée, en utilisant une syntaxe de préposition de navigation, dans lequel les données reconnues sont séparées en des champs par la reconnaissance de prépositions ;
générer une région de recherche adaptée, ou la mieux adaptée, aux données analysées, sur la base d'un modèle de langue de région ; et
générer un identifiant d'emplacement sur la base d'une grammaire de recherche de sous-région indexée par la région de recherche à des fins d'affichage sur un dispositif ;
dans lequel le système de navigation inclut un calendrier (532), et dans lequel l'étape d'analyse des données reconnues comprend les étapes ci-dessous consistant à :
analyser les données reconnues dans un champ de point d'intérêt, un champ « Calendrier » qui est une indication qu'un utilisateur demande pour le point d'intérêt sur la base du calendrier, et un champ de date ; et
insérer les informations d'adresse ou d'emplacement dans les données analysées (534) sur la base du calendrier.

2. Procédé selon la revendication 1, dans lequel l'étape de génération de la région de recherche consiste à générer la région de recherche sur la base d'un score de confiance.

3. Procédé selon la revendication 1, comprenant en outre l'étape consistant à analyser une utilisation antérieure d'une entrée précédente de l'entrée parlée.

4. Procédé selon la revendication 1, dans lequel l'étape de génération de l'identifiant d'emplacement comprend l'étape consistant à interpréter l'entrée parlée en tant qu'une adresse, une intersection, un point d'intérêt, un listage ou un itinéraire.

5. Système de navigation comprenant :
une interface utilisateur destinée à recevoir un énoncé unique d'une entrée parlée ; et
une unité de commande, couplée à l'interface utilisateur ;
dans lequel l'unité de commande est apte à :
mettre en oeuvre une reconnaissance vocale en vue de générer des données reconnues incluant une date calendaire, à partir de l'énoncé unique reçu ;
analyser les données reconnues de manière à générer des données analysées, en séparant les données reconnues en un champ, incluant une locution ou un ou plusieurs mots de l'entrée parlée, en utilisant une syntaxe de préposition de navigation, dans lequel les données reconnues sont séparées en des champs par la reconnaissance de prépositions ;
générer une région de recherche adaptée, ou la mieux adaptée, aux données analysées, sur la base d'un modèle de langue de région ; et
générer un identifiant d'emplacement sur la base d'une grammaire de recherche de sous-région indexée par la région de recherche à des fins d'affichage sur un dispositif ; dans lequel le système de navigation inclut un calendrier (532), et dans lequel l'étape d'analyse des données reconnues comprend les étapes ci-dessous consistant à :
analyser les données reconnues dans un champ de point d'intérêt, un champ « Calendrier » qui est une indication qu'un utilisateur demande pour le point d'intérêt sur la base du calendrier, et un champ de date ; et
insérer les informations d'adresse ou d'emplacement dans les données analysées (534) sur la base du calendrier.

6. Système selon la revendication 5, dans lequel l'unité de commande est destinée à générer la région de recherche sur la base d'un score de confiance.

7. Système selon la revendication 5, dans lequel l'unité de commande est destinée à analyser une utilisation antérieure d'une entrée précédente de l'entrée parlée.

8. Système selon la revendication 5, dans lequel l'unité de commande est destinée à interpréter l'entrée parlée en tant qu'une adresse, une intersection, un point d'intérêt, un listage ou un itinéraire.
